# EUROPÄISCHE PATENTSCHRIFT

(11) **EP 3 235 693 B1**
(45) Veröffentlichungstag und Bekanntmachung des Hinweises auf die Patenterteilung: **07.11.2018**
(21) Anmeldenummer: 17000474.1
(22) Anmeldetag: 22.03.2017
(51) Int. Cl.: B60R 22/18, F16B 37/04, B60N 2/42, B60N 2/68

(54) **TRÄGER FÜR EIN GURTRÜCKHALTESYSTEM**
SUPPORT FOR A BELT RETENTION SYSTEM
SUPPORT POUR UN SYSTÈME DE RETENUE DE COURROIE

(30) Priorität: 19.04.2016 DE 102016004614
(43) Veröffentlichungstag der Anmeldung: 25.10.2017
(73) Patentinhaber: SKA Sitze GmbH, 76744 Wörth am Rhein (DE)
(72) Erfinder: Schäfer, Timo, 75203 Königsbach-Stein (DE); Ade, Klaus Oliver, 75196 Remchingen (DE)
(74) Vertreter: Petersen, Frank

(56) Entgegenhaltungen:
- DE-A1- 10 103 841
- DE-A1-102008 008 696
- DE-U1- 9 110 381
- DE-U1- 9 413 808

## Beschreibung

Die Erfindung betrifft einen Träger für ein Gurtrückhaltesystem für ein Fahrzeug, insbesondere ein Wohnmobil oder einen Transporter, mit wenigstens einer im Wesentlichen vertikal verlaufenden Stütze gemäß dem Oberbegriff des beigefügten Hauptanspruches.

Wohnmobile werden üblicherweise auf Fahrgestellen von Kleintransportern aufgebaut. Es wird dabei im Wesentlichen unterschieden, ob man Kastenwagen, teilintegrierte Wohnmobile oder aber vollintegrierte Wohnmobile hat. Bei Kastenwagen und teilintegrierten Wohnmobilen wird ein vorhandenes Fahrzeug eines Transporterherstellers als Wohnmobilbasis benutzt und durch einen Ausbau bzw. Aufbau im Wohnbereich ergänzt.

Bei den vollintegrierten Wohnmobilen ist der Fahrerbereich vollständig in das Fahrzeug und damit in den Wohnbereich integriert. Man verzichtet also auf die Verwendung eines vom Lieferanten des Transporters stammendes Führerhaus und baut dieses stattdessen mit Fenstern, Türen und Wandung zusammen mit dem Wohnbereich auf.

Problematisch dabei ist die Anbringung von für Passagiere vorgesehenen und deshalb vorgeschriebenen Gurtrückhaltesystemen, für die eine feste Verankerung vorzusehen ist.

Bei den Kastenwagen und teilintegrierten Wohnmobilen können diese, soweit sie für im Führerhaus sitzende Passagiere vorgesehen sind, an den serienmäßig vom Transporterhersteller z.B. an der sogenannten B-Säule angebrachten Befestigungspunkten angebracht werden.

Bei den vollintegrierten Wohnmobilen werden die vorgeschriebenen Gurtrückhaltesysteme statt dessen oft auch integriert an den Passagiersitzen im Fahrerhaus befestigt, die in die Wohnmobile eingebaut werden, um die beim Auftreten eines Unfalles am Gurtrückhaltesystem wirkenden Kräfte aufzunehmen und in die Fahrzeugstruktur ableiten zu können.

Dies ist insbesondere deshalb notwendig, weil die für die Wände von derartigen Wohnmobilaufbauten üblicherweise verwendeten Plattenmaterialien, die insbesondere unter den Gesichtspunkten von geringem Gewicht und hoher thermischer Isolation ausgewählt werden, für die Aufnahme von derartigen Kräften nicht geeignet sind, die Gurtrückhaltesysteme also nur schwierig an den Wänden befestigt werden können.

Das vergleichbare Problem stellt sich somit auch für die Befestigung von Gurtrückhaltesystemen, die für Passagiere vorgesehen und vorgeschrieben sind, die im eigentlichen Wohnbereich eines Wohnmobils mitreisen, wenn dieses für mehr als zwei Personen zugelassen ist, also auch außerhalb des Fahrerhauses mit normalerweise zwei Plätzen weitere Passagiersitze vorgesehen sein müssen.

Diese Passagiere reisen dabei häufig auf einer Sitzbank mit, die in das Wohnmobil als Teil einer Sitz- oder Tischkombination integriert ist, die auch als Dinette bezeichnet wird und im stationären Zustand des Wohnmobils häufig auch zu einem Schlafplatz umzubauen ist.

Die für Passagiere, die auf derartigen Sitzbänken reisen, vorgesehenen Gurtrückhaltesysteme sind ebenfalls nicht an den Materialien zu befestigen, aus denen die Sitzbank gefertigt ist oder die benachbart zu diesen Sitzbänken angeordnet sind und aus denen insbesondere auch die Möbeleinbauten des Wohnmobils hergestellt sind, da diese Materialien z.B. als Möbelbau-Spanplatten für die Aufnahme von an einem Gurtrückhaltesystem auftretenden Kräfte nicht entsprechend dimensioniert sind.

Stattdessen werden die Gurtrückhaltesysteme an Trägern befestigt, die separat in die Wohnmobile eingebaut werden. Ein derartiger Träger ist beispielsweise aus der DE 91 10 381 U1 bekannt. DE9110381 U1 offenbart einen Träger gemäß dem Oberbegriff des Patentanspruchs 1.

Trägerprofile für andere Einsatzzwecke sind im Übrigen beispielsweise bekannt aus der DE 10 2008 008 696 A1 oder der DE 101 03 841 A1.

Häufig werden für derartige Träger, wie sie bei der vorliegenden Erfindung im Vordergrund stehen, Konstruktionen aus Eisen- oder Stahlprofilen verwendet, da diese insbesondere gut schweißbar sind.

Nachteilig ist bei derartigen Konstruktionen aber, dass sie insbesondere sehr schwer sind und dass sie üblicherweise jeweils spezifisch für einzelne Wohnmobilmodelle hergestellt werden, z.B. um unterschiedliche Höhen von Sitzbänken bei unterschiedlichen Wohnmobilaufbauten oder unterschiedliche Einbausituationen z.B. in Hinblick auf benachbart zu der Sitzbank befindlich Einbauten (Möbel/Wände/etc.) berücksichtigen zu können und vor allem um fahrzeugspezifisch eine zusätzliche Kraftableitung für die senkrechten Stützen vorzusehen, da hierfür notwendige Elemente im Wesentlichen an den Stützen angeschweißt werden müssen, um entsprechende Kräfte optimal aufnehmen und an im Bereich des Bodens des Wohnmobilaufbaus verlaufende Verstrebungen ableiten zu können.

Aufgabe der vorliegenden Erfindung ist es daher, einen Träger für ein Gurtrückhaltesystem wie oben beschrieben dahingehend weiter zu entwickeln, dass sowohl die Anbringung von beispielsweise Gurtumlenkpunkten an verschiedensten Stellen möglich ist und auch die Verbindung von bei diesen Trägern vorhandenen Stützen mit beispielsweise Querträgern oder ähnlichem zu erleichtern ist.

Diese Aufgabe wird erfindungsgemäß dadurch gelöst, dass die Stütze in Horizontalrichtung einen sich nach vorne verjüngenden, im Wesentlichen ringförmigen und mit einem vertikal durchgängig verlaufenden Öffnungsschlitz versehenen, offenen Ω-Querschnitt mit einer um einen Mittelraum umlaufenden Wandung aufweist mit seitlich des Öffnungsschlitzes liegenden, sich in Querrichtung erstreckenden Flanschflächen.

Die Erfindung hat den Vorteil, dass eine derartige Stütze aufgrund des vertikal durchgängig verlaufenden Öffnungsschlitzes ermöglicht, in diesem beispielsweise einen Gurtumlenkpunkt stufenlos in jeder beliebigen Höhe zu befestigen. Gleichermaßen wird durch die sich in Querrichtung erstreckenden Flanschflächen, die sich seitlich an den Öffnungsschlitz anschließen, die Möglichkeit eröffnet, zusätzliche Abstützelemente oder aber Querträger etc. in optimierter Weise z.B. mittels Verklemmung oder auch einer Verklebung an die Stütze anzuschließen, wobei gleichzeitig durch die ringförmig um den Mittelraum umlaufende Wandung der Stütze eine ausreichende Steifigkeit und Torsionsfestigkeit der Stütze zu erreichen ist.

Um die Verwendungsmöglichkeit der Stütze zu verbessern, wird außerdem noch vorgeschlagen, die Flanschflächen mit T-Nuten zu besetzen. Damit besteht die Möglichkeit, weitere Elemente an der Stütze zu fixieren, die beispielsweise für den Innenausbau eines Wohnmobiles benötigt werden.

Es ist dabei insbesondere vorgesehen, dass die Verbindung der Wandung, die bei der Stütze um den Mittelraum umläuft, mit den Flanschflächen, die sich seitlich vom Öffnungsschlitz anschließen, direkt benachbart zu diesem Öffnungsschlitz liegt. Damit sind im Bereich des Öffnungsschlitzes in den Träger eingeleitete Kräfte unmittelbar an die Wandung weiterzuführen.

Es wird dabei vorgeschlagen im Bereich der genannten Verbindung von Wandung und Flanschflächen die sich hier ergebende, insbesondere spitzwinkelige Ecke dazu zu nutzen, einen im Wesentlichen parallel zu dem Öffnungsschlitz verlaufenden Einschraubkanal vorzusehen. Mit diesem ist es insbesondere möglich, die Stütze an ihrem unteren Ende über eine Schraubverbindung mit einem sie tragenden Schuh zu verbinden.

Um die Verwendungsmöglichkeiten und dabei auch die Integrierbarkeit des Systems in den Aufbau eines Wohnmobils weiter zu verbessern, wird vorgeschlagen, dass die Stütze an ihrer Wandung seitlich und/oder an ihrer Rückseite mit wenigstens einer T-Nut versehen ist. Über diese können weitere Bauteile oder Bauelemente mit der Stütze verbunden werden.

Die Wandstärke zumindest einzelner T-Nuten kann dabei größer sein als die der Wandung. Nicht nur, dass hierdurch die Stabilität der gesamten Stütze verbessert wird, es sind aufgrund derartig verstärkter Wände einer T-Nut in besonders effektiver Weise auch hohe Klemmkräfte aufbringbar, mit denen bedarfsweise Elemente an dieser T-Nut und damit an der Stütze zu befestigen sind.

Bei einer weiteren bevorzugten Ausführungsform der Erfindung ist in den von der Wandung der Stütze umgebenden Mittelraum wenigstens eine mit der Rückseite der Stütze verbundene Mittelwand vorhanden. Dies bewirkt eine verbesserte Biegesteifigkeit der Stütze, die im Falle eines Unfalles von Vorteil sein kann.

Es ist dabei im Rahmen der Erfindung, dass die Mittelwand im Bereich des Öffnungsschlitzes eine weitere T-Nut trägt. Dies verbessert die Einsetzbarkeit der Stütze weiter.

Vorzugsweise ist dabei die Rückseite der Stütze im Bereich ihrer Verbindung mit der Mittelwand in den Mittelraum eingezogen. Auch hierdurch ist es möglich, die Stabilität der Stütze zu verbessern, insbesondere da so von der Mittelwand auf die Stütze wirkende Kräfte besser abgeleitet werden können.

Es wird vorzugsweise vorgeschlagen, die hier beschriebene Stütze als Strangpressprofil herzustellen, insbesondere aus Aluminium. Auf diese Weise sind derartige Elemente relativ kostengünstig herstellbar.

Weitere Vorteile und Merkmale der Erfindung ergeben sich aus der nachfolgenden Beschreibung von Ausführungsbeispielen. Dabei zeigt:
- Fig. 1: einen Horizontalschnitt durch eine Stütze;
- Fig. 2: die perspektivische Ansicht einer Stütze gemäß Fig. 1;
- Fig. 3: eine horizontale Schnittansicht einer Stütze mit Mittelwand;

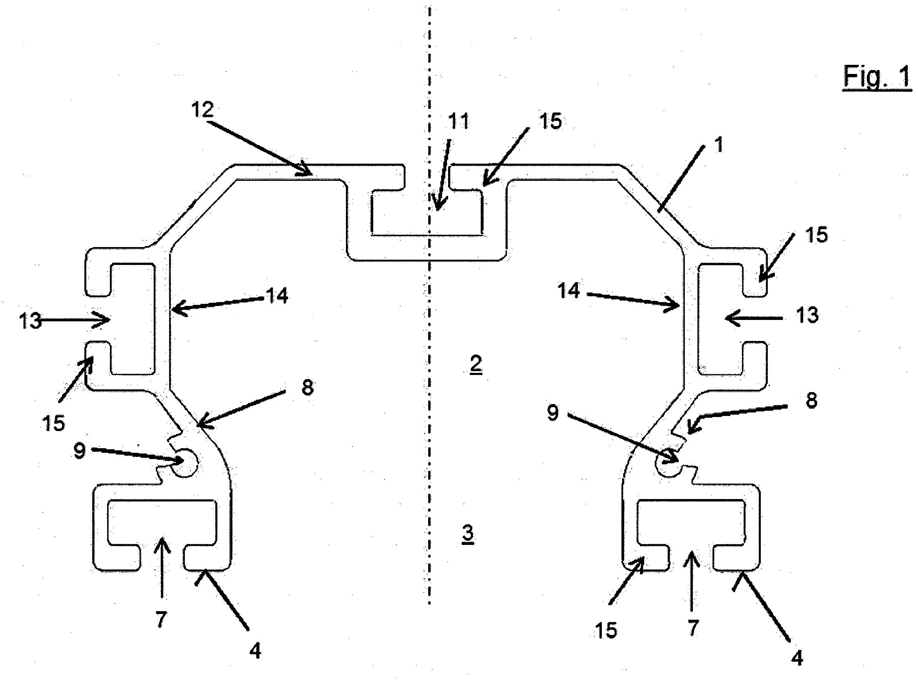

In Fig. 1 erkennt man den Horizontalschnitt durch eine Stütze für den Träger eines Gurtrückhaltesystems. Diese Stütze hat eine Wandung 1, die um einen Mittelraum 2 umläuft. Die Enden der Wandung 1 liegen seitlich eines vertikal verlaufenden Öffnungsschlitzes 3, über den der im Inneren der Stütze liegende Mittelraum 2 mit der Umgebung verbunden ist.

Seitlich des Öffnungsschlitzes 3 sind sich in einer Querrichtung erstreckende, sich an die Wandung 1 anschließende und einstückig mit dieser verbundene Flanschflächen 4 zu erkennen. Der Querschnitt durch die Stütze hat somit grundsätzlich die Form eines Ω.

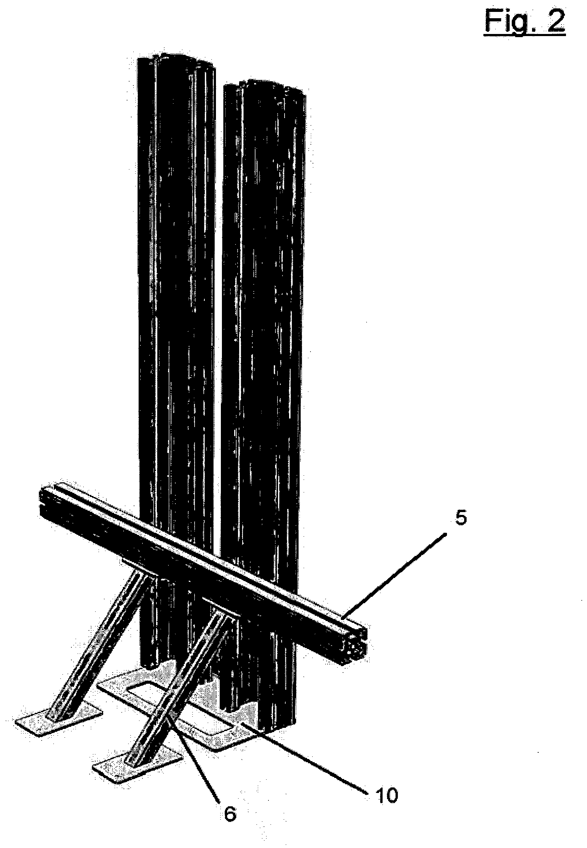

Wie in der Fig. 2 zu erkennen ist, kann an die Flanschflächen 4 ein Querträger 5 und - ggf. auch über den Querträger 5 - Schrägstützen 6 befestigt werden. Hierzu können die Flanschflächen 4 auch mit T-Nuten 7 versehen sein.

Es ist hier zu erkennen, dass die Wandung 1 an dem dem Öffnungsschlitz 3 zugewandten Bereich der Flansche 4 bzw. der T-Nuten 7 in diese übergehen. In der sich dabei bildenden insbesondere wie hier zu erkennen spitzwinkeligen Ecke 8 ist ein Einschraubkanal 9 angeordnet. Dieser Einschraubkanal 9 ist einerseits nach außen geöffnet, bietet andererseits aber auch die Möglichkeit, normal zur Zeichenebene entsprechende Befestigungsschrauben aufzunehmen, mit der die hier dargestellte Stütze beispielsweise an einer Bodenplatte 10 zu befestigen ist, wie dies in Fig. 2 gezeigt ist.

Außer den T-Nuten 7 an der Vorderseite der Stütze weist die in Fig. 1 dargestellte Ausführungsform einerseits auch noch eine weitere T-Nut 11 an ihrer Rückseite 12 auf als auch T-Nuten 13 an den sich jeweilis gegenüberliegenden seitlichen Bereichen. Es sei darauf hingewiesen, dass die im Wesentlichen C-förmigen T-Nuten zumindest abschnittsweise größere Dicken ihrer Wandbereiche 15 haben, wodurch hier bei Bedarf auch höhere Klemmkräfte aufgebracht werden können, wenn über diese T-Nuten hier nicht näher dargestellten Elemente an der Stütze befestigt werden.

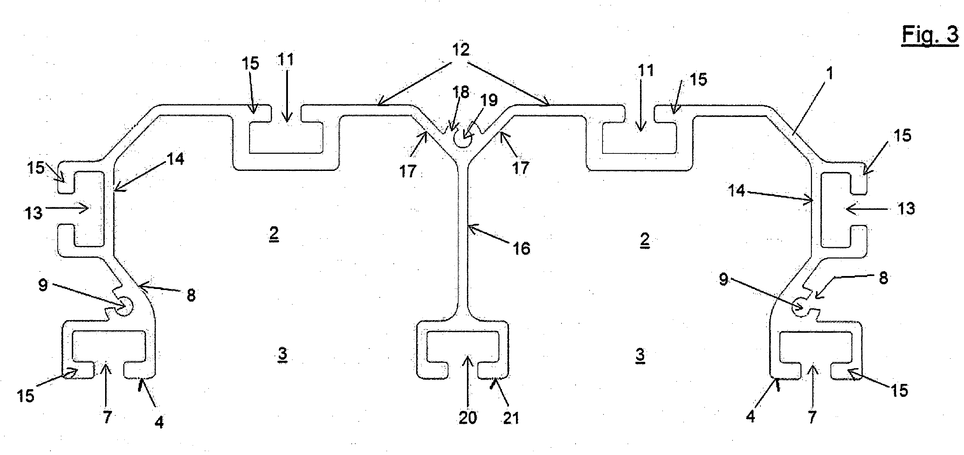

In der Fig. 3 ist eine Schnittansicht durch eine weitere Ausführungsform einer Stütze zu erkennen. Bei dieser sind identische Teile mit identischen Bezugszeichen versehen.

Die hier dargestellte weitere Ausführungsform zeichnet sich insbesondere dadurch aus, dass sie in den Mittelraum 2 noch eine Mittelwand 16 angeordnet hat, die an der Rückseite 12 der Stütze angeschlossen ist. Diese Rückseite 12 der Stütze ist dabei im Bereich ihrer Verbindung mit der Mittelwand 16 über zwei abgeschrägte Wandabschnitte 17 eingezogen. In der durch die beiden Wandabschnitte 17 sowie die Mittelwand 16 gebildeten Ecke 18 befindet sich ein weiterer Einschraubkanal 19, der - wie auch der schon oben diskutierte Einschraubkanal 9 - nach außen offen ist und ansonsten dazu dienen kann, über eine normal zur Zeichenebene laufende Befestigungsschraube einen weiteren Verbindungspunkt mit einer Bodenplatte zu liefern.

Die Mittelwand 16 trägt an ihrem vorderen, im Bereich des Öffnungsschlitzes 3 liegenden Endes auch noch einen T-Nut-Abschnitt 20, wobei die Vorderseite 21 dieser T-Nut mit den Flanschflächen 4 fluchtet, die an den jeweils außenliegenden Kanten des Öffnungsschlitzes 3 an diesen angrenzen.

Die hier dargestellten Stützen sind als Strangpressprofile aus Aluminium mit Wandung, Flanschen, T-Nuten etc. einstückig hergestellt.

### Bezugszeichenliste

- 1: Wandung
- 2: Mittelraum
- 3: Öffnungsschlitz
- 4: Flanschflächen
- 5: Querträger
- 6: Schrägstützen
- 7: T-Nuten
- 8: Ecke
- 9: Einschraubkanal
- 10: Bodenplatte
- 11: T-Nut
- 12: Rückseite
- 13: T-Nuten
- 14: seitlicher Bereich
- 15: Wandbereiche
- 16: Mittelwand
- 17: abgeschrägte Wandabschnitte
- 18: Ecke
- 19: Einschraubkanal
- 20: T-Nut-Abschnitt
- 21: Vorderseite

## Patentansprüche

1. Träger für ein Gurtrückhaltesystem für ein Fahrzeug, insbesondere ein Wohnmobil oder einen Transporter, mit wenigstens einer vertikal verlaufenden Stütze,
wobei die Stütze in Horizontalrichtung einen sich nach vorne verjüngenden, im Wesentlichen ringförmigen und mit einem vertikalen Öffnungsschlitz (3) versehenen Querschnitt mit einer um einen Mittelraum (2) umlaufenden Wandung (1) aufweist, mit seitlich des Öffnungsschlitzes (3) liegenden, sich in Querrichtung erstreckenden Flanschflächen (4),
**dadurch gekennzeichnet,**
**dass** der Öffnungsschlitz (3) vertikal durchlaufend ist und der Querschnitt damit offen und Ω-förmig ist.

2. Träger gemäß Anspruch 1,
**dadurch gekennzeichnet,**
**dass** die Flanschflächen (4) mit T-Nuten (7) besetzt sind.

3. Träger gemäß Anspruch 1 oder 2,
**dadurch gekennzeichnet,**
**dass** die Verbindung der Wandung (1) mit den Flanschflächen (4) im Bereich des Öffnungsschlitzes (3) ist.

4. Träger gemäß Anspruch 3,
**dadurch gekennzeichnet,**
**dass** im Bereich der Verbindung ein im Wesentlichen parallel zum Öffnungsschlitz (3) verlaufender Einschraubkanal (9) ist.

5. Träger gemäß einem oder mehreren der vorhergehenden Ansprüche,
**dadurch gekennzeichnet,**
**dass** die Stütze an ihrer Wandung (1) seitlich und/oder an ihrer Rückseite (12) mit wenigstens einer T-Nut (13; 11) versehen ist.

## Claims

1. Support for a belt retention system for a vehicle, in particular a caravan or a van, comprising at least one vertically running prop, the prop having, in the horizontal direction, a substantially annular cross section which tapers towards the front and is provided with a vertical opening slot (3), the cross section comprising a wall (1) that surrounds a central space (2) and comprising flange faces (4) extending in the transverse direction and located at the side of the opening slot (3), **characterised in that** the opening slot (3) is vertically continuous and the cross section is thus open and Ω-shaped.

2. Support according to claim 1, **characterised in that** the flange faces (4) have T-grooves (7) therein.

3. Support according to either claim 1 or claim 2, **characterised in that** the connection between the wall (1) and the flange faces (4) is in the region of the opening slot (3).

4. Support according to claim 3, **characterised in that** there is an insertion channel (9) running substantially parallel to the opening slot (3) in the region of the connection.

5. Support according to one or more of the preceding claims, **characterised in that** the prop is provided with at least one T-groove (13; 11) in the side of the wall (1) thereof and/or in the rear side (12) thereof.

## Revendications

1. Support pour un système de retenue de ceinture pour un véhicule, en particulier un camping-car ou un fourgon, comportant au moins un montant s'étendant verticalement,
le montant présentant dans la direction horizontale une section transversale sensiblement annulaire qui se rétrécit vers l'avant et est munie d'une fente d'ouverture verticale (3), avec une paroi (1) qui entoure un espace central (2) et présente des surfaces de bride (4) situées latéralement par rapport à la fente d'ouverture (3) et s'étendant dans la direction transversale,
**caractérisé en ce**
**que** la fente d'ouverture (3) est continue verticalement et la section transversale est ainsi ouverte et en forme de Ω.

2. Support selon la revendication 1,
**caractérisé en ce**
**que** les surfaces de bride (4) sont pourvues de rainures en T (7).

3. Support selon la revendication 1 ou 2,
**caractérisé en ce**
**que** la liaison de la paroi (1) avec les surfaces de bride (4) se situe dans la zone de la fente d'ouverture (3).

4. Support selon la revendication 3,
**caractérisé en ce**
**qu'**un canal de vissage (9) s'étendant sensiblement parallèlement à la fente d'ouverture (3) se trouve dans la zone de la liaison.

5. Support selon l'une ou plusieurs des revendications précédentes,
**caractérisé en ce**
**que** le montant est muni d'au moins une rainure en T (13 ; 11) sur sa paroi (1) latéralement et/ou sur sa face arrière (12).
